# EUROPÄISCHE PATENTANMELDUNG

(11) **EP 2 474 486 A1**
(43) Veröffentlichungstag der Anmeldung: **11.07.2012**
(21) Anmeldenummer: 12150004.5
(22) Anmeldetag: 02.01.2012
(51) Int. Cl.: B65G 15/42, B65G 23/06

(54) **Förderband mit Antriebsnocken und Förderrad zum Antreiben eines solchen Förderbands**

(30) Priorität: 05.01.2011 DE 102011002484
(71) Anmelder: HAUNI Maschinenbau AG, 21033 Hamburg (DE)
(72) Erfinder: Burfeind, Kai, 21684 Agathenburg (DE)
(74) Vertreter: Grebner, Christian Georg Rudolf

(57) **Zusammenfassung**

Die Erfindung betrifft ein Fördermittel (10) zum Fördern von Tabakgut für eine Fördereinrichtung (F) der Tabak verarbeitenden Industrie. Das Fördermittel (10) zeichnet sich dadurch aus, dass das Fördermittel (10) als ein Kettfäden (102) und Schussfäden (104) aufweisender Gewebegurt (10) ausgebildet ist, wobei der Gewebegurt (10) eine innenseitige Laufseite (12) und eine außenseitige Tragseite (11) zur Aufnahme des zu fördernden Tabakguts aufweist, wobei an der innenseitigen Laufseite (12) Nocken (14) angeordnet sind, wobei die Nocken (14) in Eingriff mit Nockenaufnahmen (22) eines Förderrads (20) bringbar sind. Die Erfindung betrifft ferner eine Antriebseinrichtung für ein solches Fördermittel (10) und ein Verfahren zum Herstellen eines solchen Fördermittels (10).

## Beschreibung

Die Erfindung betrifft ein Fördermittel zum Fördern von Tabakgut für eine Fördereinrichtung der Tabak verarbeitenden Industrie sowie eine Antriebseinrichtung für ein Fördermittel zum Fördern von Tabakgut.

Ferner betrifft die Erfindung eine Förderanlage der Tabak verarbeitenden Industrie zum Fördern von Tabakgut und ein Verfahren zum Herstellen eines Fördermittels für die Förderung von Tabakgut für eine Fördereinrichtung der Tabak verarbeitenden Industrie.

In der Tabak verarbeitenden Industrie wird Tabakmaterial, z.B. Schnitttabak, Tabakfolie, Rohtabak, Tabakrippen, expandierter Tabak und zu Maschinen zur Weiterverarbeitung bzw. zur Tabakvorbereitung vorzugsweise über Förderanlagen wie z.B. Förderbändern transportiert. Bei diesen Förderanlagen läuft das Förderband über Antriebs- und Umlenktrommeln, wobei das Förderband unter Vorspannung den Zugträger bildet.

Eine weitere Ausführungsform einer Förderanlage für Tabak, bei der insbesondere hohe Verlaufssicherheit und Schlupffreiheit erreicht wird, stellt eine kettengeführte Förderanlage dar, wobei die Ketten als Zugträger fungieren.

Bei den kettengeführten Förderbändern sind Quertraversen unter dem Förderband vorgesehen, um das Förderband zu unterstützen. Bei den Förderbändern, die unter Vorspannung gesetzt sind, wird diese Spannung für eine feste Umschlingung einer Umlenkrolle zur Antriebsübertragung benötigt. Diese Vorspannung führt allerdings bei breiten Förderbändern in den Knickumlenkungen zu einem Ausbeulen der Förderbänder und begrenzt dadurch die Gurtbreite.

Ausgehend von diesem Stand der Technik besteht die Aufgabe der Erfindung darin, ein Fördermittel zum Transport von Tabakgut zur Verfügung zu stellen, welches besonders robust ausgeführt sowie wartungsarm und geräuscharm betreibbar sein soll.

Gelöst wird diese Aufgabe durch ein Fördermittel zum Fördern von Tabakgut für eine Fördereinrichtung der Tabak verarbeitenden Industrie, das dadurch weitergebildet wird, dass das Fördermittel als ein Kettfäden und Schussfäden aufweisender Gewebegurt oder Fördergewebegurt ausgebildet ist, wobei der Gewebegurt eine innenseitige Laufseite und eine außenseitige Tragseite zur Aufnahme des zu fördernden Tabakguts aufweist, wobei an der innenseitigen Laufseite Nocken oder Fördernocken angeordnet sind, wobei die Nocken in Eingriff mit Nockenaufnahmen eines Förderrads bringbar sind.

Die Erfindung beruht auf dem Gedanken, ein bandförmiges, quasiendloses d.h. in sich geschlossenes Fördermittel in Form eines, insbesondere positiv angetriebenen, einlagigen oder mehrlagigen Gewebegurts mit Kettfäden und Schussfäden des Gewebegurts bereitzustellen, wobei durch die Kettfäden und Schussfäden gegenüber bekannten Förderbändern in Förderanlagen der Tabak verarbeitenden Industrie die Dehnungseigenschaften bzw. die Dehnungsbreite reduziert ist bzw. herabgesetzt sind und das Fördermittel eine erhöhte Querstabilität, d.h. eine erhöhte Stabilität in Querrichtung aufweist.

Ferner sind für den Antrieb des Gewebegurts an der innenseitigen Laufseite Nocken oder Nockenpaare angeordnet, die zur Übertragung der Umfangskraft in formkomplementäre und/oder funktionskomplementäre Ausnehmungen von Nockenrädern vorspannungsfrei eingreifen. Die Nockenräder selbst sind als Förderräder bzw. Antriebseinrichtungen mit entsprechenden Nockenaufnahmen ausgestattet, wobei die Nockenräder unter Verwendung eines Drehantriebs oder dergleichen rotierend angetrieben werden.

Aufgrund der herabgesetzten Dehnungseigenschaften und der erhöhten Querstabilität ist es möglich, ein bandförmiges Fördermittel bereitzustellen, das gegenüber bekannten Förderbändern der Tabak verarbeitenden Industrie eine erhöhte Förderleistung bei gleichzeitig größerer Förderbreite ermöglicht.

Im Rahmen der Erfindung sind die Nockenaufnahmen an einem Förderrad ausgebildet, wobei das wenigstens eine Förderrad als Antriebseinrichtung für das Fördermittel bereitgestellt wird.

In einer Weiterbildung des Fördermittels ist außerdem vorgesehen, dass die Nocken an der innenseitigen Laufseite des Gewebegurts einreihig oder mehrreihig paarweise parallel oder paarweise versetzt angeordnet sind. Hierdurch wird ein zuverlässiger und dauerhafter Antrieb des Fördermittels, beispielsweise an einem Schrägförderer der Tabak verarbeitenden Industrie, gewährleistet.

Dazu ist in einer bevorzugten Ausführungsform weiterhin vorgesehen, dass der Gewebegurt auf der außenseitigen Tragseite mit einer, vorzugsweise pyrolysekonformen, Beschichtung versehen ist, wobei insbesondere die auf der Tragseite ausgebildete Beschichtung aus Polyester oder Polyolefin oder Polypropylen hergestellt ist oder besteht. Hierdurch wird ein für den Tabaksektor bzw. für die Tabak verarbeitende Industrie pyrolysekonformer Gurtwerkstoff für den Gewebegurt bereitgestellt, wobei der Gewebegurt mit unterschiedlichen Beschichtungswerkstoffen auf der Tragseite versehen sein kann.

Darüber hinaus ist in einer Weiterbildung des Fördermittels vorgesehen, dass der Gewebegurt auf der innenseitigen Laufseite mit einer Beschichtung versehen ist, wobei insbesondere die Beschichtung aus Polyester oder Polyolefin oder Polypropylen hergestellt ist.

Insbesondere ist es günstig, wenn der Gewebegurt auf der Tragseite mit einer Mitnahmeeinrichtung oder Erhebungen versehen ist, so dass die Tragseite für einen Steigtransport des Tabakmaterials mit Mitnehmern, Wellkanten oder sonstigen Ausführungen ausgestattet ist. Ebenso ist es im Rahmen der Erfindung vorgesehen, dass der Gewebegurt mit einer Profilierung bzw. einer Gurtprofilierung ausgebildet ist.

Außerdem ist es günstig, dass die Nocken auf der Laufseite aus Kunststoff, insbesondere Polyester, hergestellt sind. Hierbei sind die Nocken in einer Ausgestaltung aufgeschweißt oder als Polyesternocken beispielsweise auf einer Polyester-Laufunterseite des Gewebegurts als Polyesternocken ausgebildet.

Eine verbesserte Handhabung des Fördermittels ergibt sich dadurch, dass der Gewebegurt wenigstens ein Antistatikum, insbesondere Graphit, aufweist, so dass die während des Laufs unter Reibung entstehenden Aufladungen im Gewebegurt durch die eingebrachten Antistatika im Gewebegurt abgeleitet werden.

Darüber hinaus ist das Fördermittel erhältlich durch Ausführung von nachfolgend unten beschriebenen Verfahrensschritten. Zur Vermeidung von Wiederholungen wird auf die nachstehenden Ausführungen ausdrücklich verwiesen.

Ferner wird die Aufgabe gelöst durch eine Antriebseinrichtung für ein Fördermittel zum Fördern von Tabakgut, wie voranstehend beschrieben, die dadurch weitergebildet wird, dass die Antriebseinrichtung wenigstens ein oder mehrere Förderräder aufweist, wobei das oder die Förderräder auf ihrer Umfangsseite Nockenaufnahmen aufweisen, wobei die Nockenaufnahmen in Eingriff mit den Nocken des Fördermittels bringbar sind.

Hierbei zeichnet sich die Antriebseinrichtung dadurch aus, dass die Förderräder, die auch als Nockenräder bezeichnet werden, zusätzlich Hohlräume oder Kavernen aufweisen, wobei die Nockenaufnahmen der Förderräder zur Aufnahme von Nocken eines mit einem Gewebegurt ausgebildeten Fördermittels ausgebildet sind.

Insbesondere wird durch die Nockenaufnahmen ein Kraftschluss mit den eingreifenden Nocken des Gewebegurts, die an der Laufseite des Gewebegurts ausgebildet sind, hergestellt, um einen zuverlässigen Antrieb bzw. eine sichere Förderung des Gewebegurts zu gewährleisten.

Dazu ist in einer weiteren Ausgestaltung vorgesehen, dass die Nockenaufnahmen der Förderräder in Umfangsrichtung jeweils zwei einander gegenüberliegende Kontaktflächen für jeweils einen Nocken des Fördermittels aufweisen, wobei in radialer Richtung zwischen den Kontaktflächen für jeweils eine Nocke des Fördermittels eine Aussparung ausgebildet ist.

Hierdurch werden Hohlräume oder Kavernen bereitgestellt, die sich beispielsweise in radialer Richtung von außen nach innen vergrößern oder verjüngen, so dass Fremdkörper unterhalb der Laufseite oder an den Nocken während des Nockeneingriffs in die Nockenaufnahmen der Förderräder aus dem Eingriffsbereich oder Zahnungsbereich abgeleitet werden. Somit wird eine Selbstreinigung der Nockenräder erreicht, wodurch der Lauf der Förderräder bzw. Lauf des durch die Förderräder angetriebenen Fördermittels auch unter verschmutzten Bedingungen verbessert wird.

Dazu ist in einer Ausgestaltung vorteilhafterweise vorgesehen, dass das oder die Förderräder aus Kunststoff, insbesondere Polyester, hergestellt sind.

Insbesondere sind die Nockenaufnahmen in regelmäßigen Abständen in Umfangsrichtung der Förderräder bzw. der Nockenräder angeordnet.

Darüber hinaus zeichnet sich die Antriebseinrichtung dadurch aus, dass die Förderräder symmetrisch, insbesondere spiegelsymmetrisch, ausgebildet sind.

Ferner wird die Aufgabe gelöst durch eine Förderanlage der Tabak verarbeitenden Industrie zum Fördern von Tabakgut mit einem Fördermittel, wie voranstehend beschrieben, und/oder einer voranstehend beschriebenen Antriebseinrichtung. Zur Vermeidung von Wiederholungen wird auf die obigen Ausführungen ausdrücklich verwiesen.

Ferner wird die Aufgabe gelöst durch ein Verfahren zum Herstellen eines Fördermittels für die Förderung von Tabakgut für eine Fördereinrichtung der Tabak verarbeitenden Industrie, wobei das Fördermittel gemäß den folgenden Verfahrensschritten hergestellt wird:
- Bereitstellen mindestens eines Kettfäden und Schussfäden aufweisenden Gewebegurts mit einer vorbestimmten endlichen Länge,
- Anordnung der Enden eines Gewebegurts oder Anordnung der Enden von jeweils einem Gewebegurt in einem Verbindungsbereich, so dass die Enden in dem Verbindungsbereich übereinander liegend angeordnet werden oder sind,
- die im Verbindungsbereich übereinander liegenden Enden des Gewebegurts oder der Gewebegurte werden miteinander verbunden,
- wobei auf einer Seite, insbesondere auf der innenseitigen Laufseite, Nocken wenigstens im Bereich des Verbindungsbereichs angeordnet werden.

Dazu ist ferner vorteilhafterweise vorgesehen, dass im Verbindungsbereich die Enden des Gewebegurts oder der Gewebegurte mit jeweils einer halben Gewebegurtdicke miteinander verbunden werden.

Überdies ist es in einem Verfahrensschritt günstig, dass im Verbindungsbereich die nockenfreien Enden des Gewebegurts oder der Gewebegurte mit den in einer Matrize, insbesondere Kunststoffmatrize, bereitgestellten Nocken, insbesondere unter Verwendung einer Presseinrichtung oder Heizpresse, verschweißt werden.

Das erfindungsgemäße bandförmige Fördermittel weist einen einlagigen oder mehrlagigen Gewebegurt auf, wobei der Gewebegurt in einer Lage jeweils mit Kettfäden und Schussfäden versehen ist. Ferner ist der Gewebegurt auf einer Seite (insbesondere auf der Tragseite), oder auf beiden Seiten (Laufseite und Tragseite) mit einer Beschichtung versehen, wobei auf der Laufseite Nocken angeordnet sind.

Durch die im Gewebegurt vorliegenden oder vorhandenen Kettfäden und/oder Schussfäden wird die Dehnung des Gewebegurts unter Belastung, d.h. durch das Transportgewicht des Tabakmaterials in Längsrichtung und in Querrichtung begrenzt, wodurch die Teilungsgenauigkeit des Nockenlaufs verbessert wird.

Ferner ist in einer Weiterbildung vorgesehen, dass auf der Laufseite der Gewebegurt auch profiliert ist, so dass durch die Profilierung bzw. Strukturierung das Reibverhalten des Gewebegurts verbessert wird. Das laufseitige Profil wird beispielsweise durch Prägewalzen während der Herstellung des Fördermittels aufgebracht.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch in einer Seitenansicht einen Querschnitt durch einen Fördergewebegurt im Eingriff mit einem Nockenrad im Umlenkungsbereich des Fördergewebegurts einer Fördereinrichtung der Tabak verarbeitenden Industrie;
- Fig. 2: schematisch einen Querschnitt durch einen Fördergewebegurt in einer vergrößerten Ansicht;
- Fig. 3: schematisch eine Ansicht auf die Unterseite eines Fördergewebegurts;
- Fig. 4a, 4b: schematisch jeweils eine Seitenansicht und eine perspektivische Ansicht eines Nockenrads für einen Fördergewebegurt;
- Fig. 5a: schematisch eine Anordnung zur Verbindung von Enden eines Fördergewebegurts im geöffneten Zustand und
- Fig. 5b: schematisch eine Ansicht der Anordnung zur Verbindung der Enden des Gewebegurts im geschlossenen Zustand.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

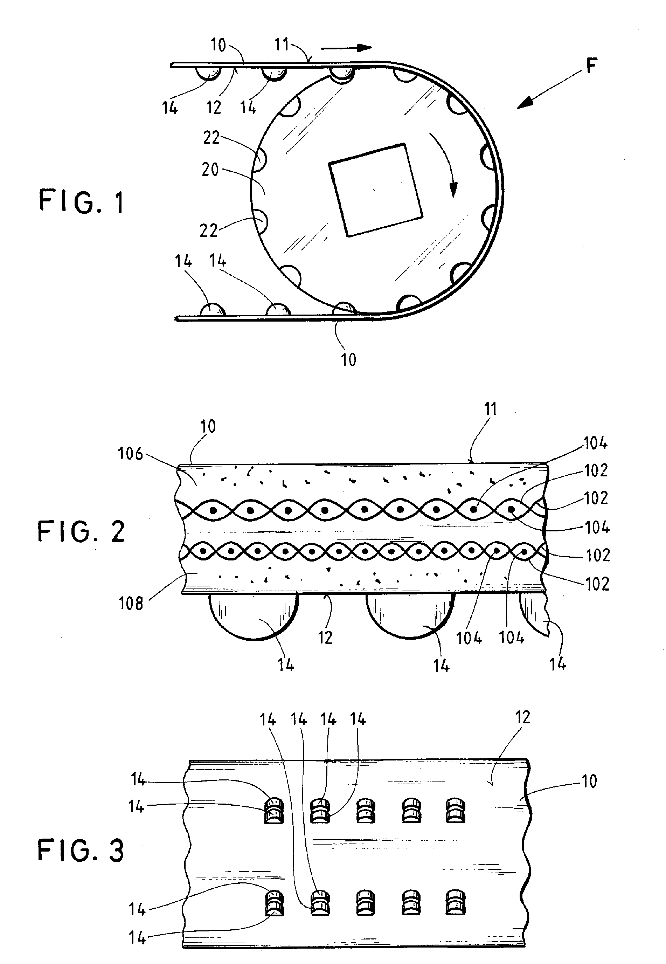

Fig. 1 zeigt in einer Seitenansicht im Ausschnitt eine Fördereinrichtung F der Tabak verarbeitenden Industrie. Die Fördereinrichtung F verfügt über ein durch einen Fördergewebegurt 10 ausgebildetes Fördermittel. Der Fördergewebegurt 10 weist auf seiner Außenseite eine Tragseite 11 auf und auf der Innenseite eine Laufseite 12. Die Laufseite 12 des Fördergewebegurts 10 verfügt ferner über in regelmäßigen Abständen angeordnete Nocken 14, die im Umlenkungsbereich des Fördergewebegurts 10 an der Fördereinrichtung F in Nockenaufnahmen 22 eines durch einen (hier nicht dargestellten) Antrieb angetriebenen Nockenrads 20 eingreifen.

Das als Förderrad ausgebildete Nockenrad 20 verfügt in Umfangsrichtung über Nockenaufnahmen 22, in die die Nocken 14 des Fördergewebegurts 10 eingreifen. Hierzu sind die Nocken 14, die an der Laufseite 12 des Fördergewebegurts 10 aufgeschweißt oder verklebt sind, form- und funktionskomplementär zu den Nockenaufnahmen 22 des Nockenrads 20 ausgebildet.

In Fig. 2 ist schematisch in einer vergrößerten Darstellung ein Querschnitt durch einen erfindungsgemäßen Fördergewebegurt 10 dargestellt. Der Fördergewebegurt 10 ist dabei als positiv angetriebener Gewebegurt ausgebildet, wobei der Fördergewebegurt 10 aus mehreren Gewebelagen besteht, wobei eine Gewebelage durch Kettfäden 102 und Schussfäden 104 gebildet wird.

Bei dem in Fig. 2 dargestellten Ausführungsbeispiel weist der Fördergewebegurt 10 zwei Gewebelagen auf, wobei jede Gewebelage aus sich kreuzenden Kettfäden 102 und Schussfäden 104 besteht. Hierbei sind die Kettfäden 102 und die Schussfäden 104 vorzugsweise aus einem Kunststoff hergestellt. Darüber hinaus sind bei dem in Fig. 2 dargestellten Ausführungsbeispiel auf der Tragseite 11 und auf der Laufseite 12 pyrolysekonforme Beschichtungen 106, 108, beispielsweise aus Polyolefinen oder Polyester, aufgebracht. Durch die Beschichtungen 106, 108 wird gewährleistet, dass der Fördergewebegurt 10 z.B. nelkenbeständig bei Polyolefinen ist.

Durch die Verwendung eines Fördergewebegurts 10 in einer Fördereinrichtung der Tabak verarbeitenden Industrie wird erreicht, dass das Fördermittel für das Tabakmaterial eine reduzierte Dehnung gegenüber herkömmlichen gewebelosen oder vorgespannten Transportbändern aufweist. Darüber hinaus wird durch die Verwendung des Fördergewebegurts 10 erreicht, dass hohe Zugkräfte aufgenommen werden können, so dass das durch den Fördergewebegurt 10 bereitgestellte Fördermittel eine höhere Zugfestigkeit gegenüber den bisher eingesetzten Fördermitteln erreicht.

Überdies wird aufgrund der geringen Dehnungseigenschaften und der hohen Zugfestigkeit erreicht, dass der Gewebegurt eine Förderbreite zwischen 1500 mm bis 5000 mm, aufweist. Dadurch ist es möglich, die Förderleistung bei Förderanlagen der Tabak verarbeitenden Industrie auf zwischen 6 t pro Stunde und 45 t pro Stunde zu erhöhen.

Die Nocken 14 auf der Laufseite 12 des Fördergewebegurts 10 können in einer Ausgestaltung aufgeschweißt oder an der Laufseite 12 angeklebt sein. Vorzugsweise sind dabei die Nocken 14 ebenfalls aus Kunststoff, vorzugsweise aus Polyester oder Polypropylen, hergestellt.

In Fig. 3 ist eine Ansicht auf die Laufseite 12 eines Fördergewebegurts 10 schematisch in einer perspektivischen Darstellung gezeigt. Auf der Laufseite 12 sind in Förderrichtung des Fördergewebegurts 10 in regelmäßigen Abständen Nocken 14 hintereinander in einer Reihe jeweils angeordnet, wobei jeweils zwei Nocken paarweise nebeneinander angeordnet sind. Hierbei sind die paarweise angeordneten Nocken in einer Reihe hintereinander angeordnet, wobei die hintereinander angeordneten Nockenpaare in einer Reihe parallel zu den Nockenpaaren einer zweiten Reihe angeordnet sind.

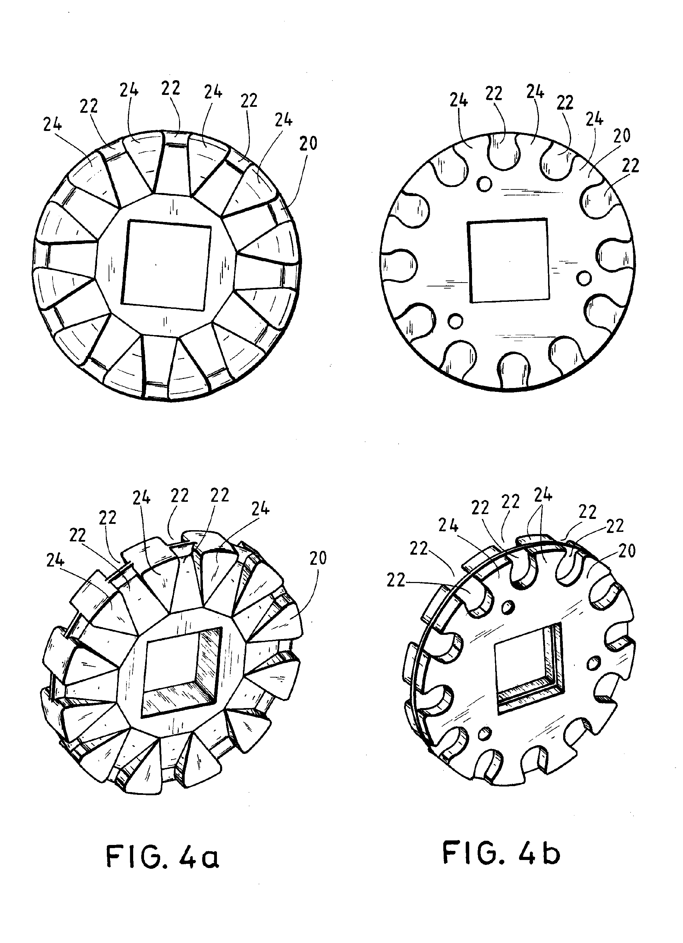

In Fig. 4a und 4b sind verschiedene Ansichten von jeweils zwei Ausführungsbeispielen für ein erfindungsgemäßes Nockenrad 20 dargestellt. Das jeweils in den Figuren 4a, 4b im oberen Bereich gezeigte Nockenrad ist in einer schematischen Seitenansicht dargestellt, während das jeweils im unteren Bereich dargestellte Nockenrad 20 in einer perspektivischen Ansicht schematisch gezeigt ist.

Das in Fig. 4a dargestellte Nockenrad 20 verfügt über die Umfangsfläche in regelmäßigen Abständen angeordnete Nockenaufnahmen 22, in die die Nocken bzw. Nockenpaare des Fördergewebegurts 10 eingreifen. Zwischen zwei Nockenaufnahmen 22 in Umfangsrichtung des Nockenrads 20 ist jeweils ein Abstandskörper 24 angeordnet, so dass sich in Umfangsrichtung des Nockenrads 20 Abstandskörper 24 und Nockenaufnahmen 22 abwechseln.

Die Abstandskörper 24 sind an der Umfangsseite mit einer vorbestimmten Breite ausgebildet, wobei die Abstandskörper 24 sich in radialer Richtung zum Drehpunkt des Nockenrads 22 verjüngen. Darüber hinaus sind die Nockenaufnahmen 22 zwischen zwei Abstandskörpern 24 offen in radialer Richtung ausgebildet, so dass die Nockenräder 20 im Bereich des Zahnfußes beidseitig (offene) Hohlräume aufweisen, die sich in radialer Richtung von außen nach innen vergrößern. Dadurch werden Fremdkörper, z.B. Schmutzpartikel oder dergleichen, von der Laufseite des Fördergewebegurts 10 während des Nockeneingriffs in eine Nockenaufnahme ungehindert aus dem Zahnbereich nach innen abgeleitet. Somit wird eine Selbstreinigung der Nockenräder 20 erreicht, wodurch der Lauf des in die Nockenaufnahmen 22 eingreifenden Fördergewebegurts 10 sich im Betrieb verbessert.

Das Nockenrad 20 ist vorteilhafterweise aus Kunststoff, insbesondere aus Polyester, hergestellt. Im Rahmen der Erfindung ist es ebenso möglich, dass ein anderer Werkstoff wie z.B. Metall für die Herstellung des Nockenrads 20 eingesetzt wird.

Bei der Verwendung eines Nockenrads 20 gemäß dem in Fig. 4a dargestellten Ausführungsbeispiel liegen die seitlichen Flächen der Nocken zwischen zwei außenseitigen beabstandeten Anlageflächen der jeweiligen Abstandskörper 24 an, so dass ein Kraftschluss zwischen den Nocken und den die Nocken umgebenden Abstandskörper 24 ausgebildet wird.

Das in Fig. 4a dargestellte Nockenrad 20 ist spiegelsymmetrisch ausgebildet, so dass jeweils zwei Nockenaufnahmen 22 nebeneinander angeordnet sind, um Nockenpaare gleichzeitig aufzunehmen.

In Fig. 4b ist ein weiteres Ausführungsbeispiel für ein erfindungsgemäßes Nockenrad 20 dargestellt, wobei Nockenaufnahmen 22 in radialer Richtung zur Drehachse des Nockenrads 20 tropfenförmig ausgebildet sind, so dass nach Anordnung einer Nocke in einer Nockenaufnahme 22 zwischen der Unterseite des Nockens und der tropfenförmigen Erweiterung der Nockenaufnahme 22 ein Hohlraum ausgebildet ist. Im Rahmen der Erfindung sind weitere Ausgestaltungen der Nockenaufnahmen mit hohlraumausbildenden Formen bei der Herstellung eines erfindungsgemäßen Nockenrads 20 möglich.

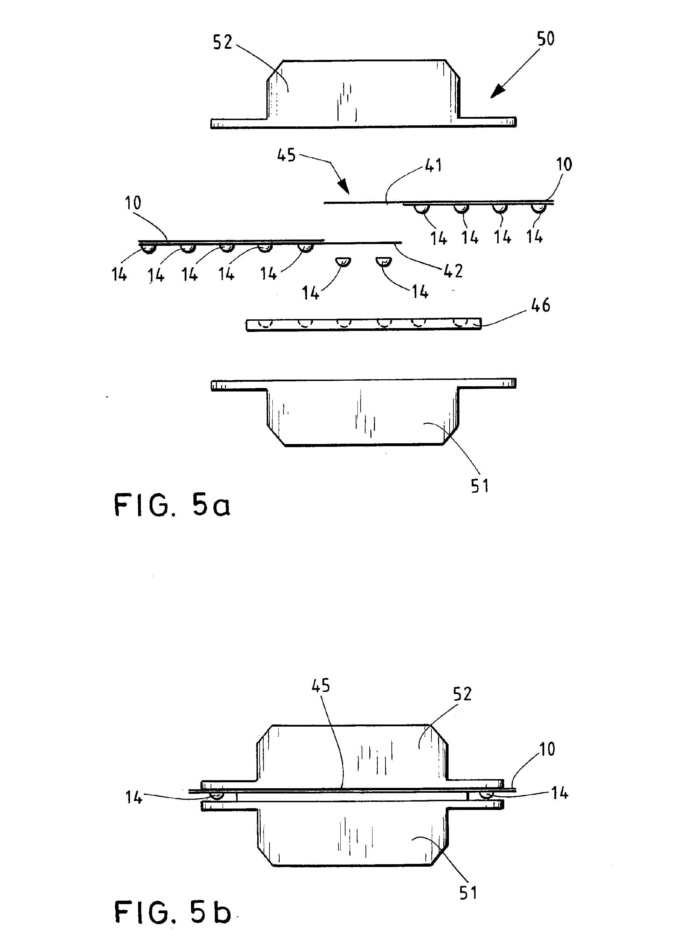

In den Figuren 5a, 5b ist schematisch jeweils eine Anordnung zum Herstellen eines endlosen oder quasi endlosen Fördergewebegurts 10 für eine Fördereinrichtung der Tabak verarbeitenden Industrie im geöffneten Zustand (vgl. Fig. 5a) und im geschlossenen Zustand (vgl. Fig. 5b) schematisch dargestellt.

Zur Herstellung eines mehrlagigen und geschlossenen, d.h. endlosen Fördergewebegurts 10 werden die Enden 41, 42 des Fördergewebegurts 10 in einem Überlappungsbereich 45 übereinander angeordnet, wobei die Enden 41, 42 jeweils eine geringere Dicke als der Fördergewebegurt 10 aufweisen. Beispielsweise sind die beiden Enden 41, 42 jeweils halb so dick wie die sonstige Dicke des Fördergewebegurts 10. Im Überlappungsbereich 45 der beiden Enden 41, 42 befinden sich keine Nocken 14. Die fehlenden Nocken 14 werden in eine formgebende Matrize 46, insbesondere Kunststoffmatrize 46, vor dem Verschweißen der beiden Enden 41, 42 eingelegt.

Um die beiden Enden 41, 42 miteinander zu verbinden und gleichzeitig auf der Unterseite des unterseitigen Endes 42, die noch fehlenden Nocken auszubilden, ist zum Verschweißen der beiden Enden 41, 42 eine Heizpresse 50 vorgesehen. Hierzu ist unterhalb der Matrize 46 eine Heizplatte 51 der Heizpresse 50 angeordnet. Auf der Oberseite ist ein Heizstempel 52 der Heizpresse angeordnet, so dass durch Zusammendrücken der Heizplatte 51 und des Heizstempels 52 die Enden 41, 42 zusammen mit den in der Matrize 46 angeordneten Nocken 14 miteinander verschweißt werden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Fördergewebegurt
- 11: Tragseite
- 12: Laufseite
- 14: Nocken
- 20: Nockenrad
- 22: Nockenaufnahme
- 24: Abstandskörper
- 41: Ende
- 42: Ende
- 45: Überlappungsbereich
- 46: Matrize
- 50: Heizpresse
- 51: Heizplatte
- 52: Heizstempel
- 102: Kettfäden
- 104: Schussfäden
- 106: Beschichtung
- 108: Beschichtung

- F: Fördereinrichtung

## Patentansprüche

1. Fördermittel (10) zum Fördern von Tabakgut für eine Fördereinrichtung (F) der Tabak verarbeitenden Industrie, **dadurch gekennzeichnet, dass** das Fördermittel (10) als ein Kettfäden (102) und Schussfäden (104) aufweisender Gewebegurt (10) ausgebildet ist, wobei der Gewebegurt (10) eine innenseitige Laufseite (12) und eine außenseitige Tragseite (11) zur Aufnahme des zu fördernden Tabakguts aufweist, wobei an der innenseitigen Laufseite (12) Nocken (14) angeordnet sind, wobei die Nocken (14) in Eingriff mit Nockenaufnahmen (22) eines Förderrads (20) bringbar sind.

2. Fördermittel (10) nach Anspruch 1, **dadurch gekennzeichnet, dass** die Nocken (14) an der innenseitigen Laufseite (12) einreihig oder mehrreihig paarweise parallel oder paarweise versetzt angeordnet sind.

3. Fördermittel (10) nach Anspruch 1 oder 2, **dadurch gekennzeichnet, dass** der Gewebegurt (10) auf der außenseitigen Tragseite (11) mit einer, vorzugsweise pyrolysekonformen, Beschichtung (106) versehen ist, wobei insbesondere die auf der Tragseite (11) ausgebildete Beschichtung (106) aus Polyester oder Polyolefin oder Polypropylen hergestellt ist oder besteht, und/oder dass der Gewebegurt (10) auf der innenseitigen Laufseite (12) mit einer Beschichtung (108) versehen ist, wobei insbesondere die Beschichtung (108) aus Polyester oder Polyolefin oder Polypropylen hergestellt ist.

4. Fördermittel (10) nach einem der Ansprüche 1 bis 3, **dadurch gekennzeichnet, dass** der Gewebegurt (10) auf der Tragseite (11) mit einer Mitnahmeeinrichtung oder Erhebungen versehen ist.

5. Fördermittel (10) nach einem der Ansprüche 1 bis 4, **dadurch gekennzeichnet, dass** die Nocken (14) auf der Laufseite (12) aus Kunststoff, insbesondere Polyester, hergestellt sind.

6. Fördermittel (10) nach einem der Ansprüche 1 bis 5, **dadurch gekennzeichnet, dass** der Gewebegurt (10) wenigstens ein Antistatikum, insbesondere Graphit, aufweist.

7. Fördermittel (10) nach einem der Ansprüche 1 bis 6, erhältlich durch Ausführung der Verfahrensschritte nach einem der Ansprüche 13 bis 15.

8. Antriebseinrichtung (20) für ein Fördermittel (10) zum Fördern von Tabakgut nach einem der Ansprüche 1 bis 7, **dadurch gekennzeichnet, dass** die Antriebseinrichtung (20) wenigstens ein oder mehrere Förderräder (20) aufweist, wobei das oder die Förderräder (20) auf ihrer Umfangsseite Nockenaufnahmen (22) aufweisen, wobei die Nockenaufnahmen (22) in Eingriff mit den Nocken (14) des Fördermittels (10) bringbar sind.

9. Antriebseinrichtung (20) nach Anspruch 8, **dadurch gekennzeichnet, dass** die Nockenaufnahmen (22) in Umfangsrichtung jeweils zwei einander gegenüberliegende Kontaktflächen für jeweils einen Nocken (14) des Fördermittels (10) aufweisen, wobei in radialer Richtung zwischen den Kontaktflächen für jeweils eine Nocke des Fördermittels (10) eine Aussparung ausgebildet ist.

10. Antriebseinrichtung (20) nach Anspruch 8 oder 9, **dadurch gekennzeichnet, dass** das oder die Förderräder (20) aus Kunststoff, insbesondere Polyester, hergestellt sind und/oder dass die Nockenaufnahmen (22) in regelmäßigen Abständen in Umfangsrichtung der Förderräder (20) angeordnet sind.

11. Antriebseinrichtung (20) nach einem der Ansprüche 8 bis 10, **dadurch gekennzeichnet, dass** das oder die Förderräder (20) symmetrisch, insbesondere spiegelsymmetrisch, ausgebildet sind.

12. Förderanlage der Tabak verarbeitenden Industrie zum Fördern von Tabakgut mit einem Fördermittel (10) nach einem der Ansprüche 1 bis 7 und/oder einer Antriebseinrichtung (20) nach einem der Ansprüche 8 bis 11.

13. Verfahren zum Herstellen eines Fördermittels (10) für die Förderung von Tabakgut für eine Fördereinrichtung der Tabak verarbeitenden Industrie mit den folgenden Schritten:
- Bereitstellen mindestens eines Kettfäden (102) und Schussfäden (104) aufweisenden Gewebegurts (10) mit einer vorbestimmten endlichen Länge,
- Anordnung der Enden (41, 42) eines Gewebegurts (10) oder Anordnung der Enden (41, 42) von jeweils einem Gewebegurt (10) in einem Verbindungsbereich (45), so dass die Enden (41, 42) in dem Verbindungsbereich (45) übereinander liegend angeordnet werden oder sind,
- die im Verbindungsbereich (45) übereinander liegenden Enden (41, 42) des Gewebegurts (10) oder der Gewebegurte (10) werden miteinander verbunden,
- wobei auf einer Seite, insbesondere auf der innenseitigen Laufseite (12), Nocken (14) wenigstens im Bereich des Verbindungsbereichs (45) angeordnet werden.

14. Verfahren nach Anspruch 13, **dadurch gekennzeichnet, dass** im Verbindungsbereich die Enden (41, 42) des Gewebegurts (10) oder die Enden (41, 42) der Gewebegurte (10) mit jeweils einer halben Gewebegurtdicke miteinander verbunden werden.

15. Verfahren nach Anspruch 13 oder 14, **dadurch gekennzeichnet, dass** im Verbindungsbereich die nockenfreien Enden (41, 42) des Gewebegurts (10) oder der Gewebegurte (10) mit den in einer Matrize (46), insbesondere Kunststoffmatrize, bereitgestellten Nocken (14), insbesondere unter Verwendung einer Presseinrichtung (50) oder Heizpresse (50), verschweißt werden.
